# EUROPEAN PATENT APPLICATION

(11) **EP 2 482 488 A1**
(43) Date of publication of application: **01.08.2012**
(21) Application number: 11736610.4
(22) Date of filing: 14.01.2011
(51) Int. Cl.: H04L 12/00

(54) **METHOD AND SYSTEM FOR AUTHORIZING MANAGEMENT OF TERMINALS OF INTERNET OF THINGS**

(30) Priority: 28.01.2010 CN 201010106593
(71) Applicant: ZTE Corporation, Shenzhen City, Guangdong 518057 (CN)
(72) Inventor: XING, Xiaojiang, Shenzhen Guangdong 518057 (CN)
(74) Representative: Krauns, Christian
(86) International application number: PCT/CN2011/070269
(87) International publication number: WO 2011/091728

(57) **Abstract**

A method for authorizing management of a terminal of Internet of Things is disclosed, which includes: the platform of Internet of Things (200) authorizing an object (300) to manage the terminal of Internet of Things (100), the authorized object is used for managing the terminal of Internet of Things (100). A system of Internet of Things is also disclosed, which includes an object (300), a platform of Internet of Things (200) and a terminal of Internet of Things (100). The platform of Internet of Things (200) is configured to authorize the object (300) to manage the terminal of Internet of Things (100); the object (300) is configured to manage the terminal of Internet of Things (100) after obtaining the authorization. Through authorizing the object (300) to manage the terminal of Internet of Things (100) by the platform of Internet of Things (200), the scheme lightens the management loads of the platform of Internet of Things (200), reduces the processing chains of the system of Internet of Things, shortens the processing delay of the system and improves the reliability of the system under the condition that the data security of the terminal of Internet of Things (100) is guaranteed.

## Description

### Technical Field

The present invention relates to the field of telecommunication and information technologies, and more especially, to a method and system for authorizing the management of a terminal of Internet of Things.

### Background of the Related Art

The Internet of Things comprises a terminal of Internet of Things, a platform of Internet of Things, and an object, and the platform of Internet of Things collects data through the terminal of Internet of Things, and provides the obtained data to the object, such as providing vehicle management, elevator management, retail management, logistics management, automation service and so on to the mankind; meanwhile, the platform of Internet of Things also provides management such as charging the terminal of Internet of Things and security of the terminal of Internet of Things and so on. The data transport bearer channel of the Internet of Things can be a wireless network or a wired network.

With more and more objects of the Internet of Things, the platform of Internet of Things achieves the management of the terminal of Internet of Things by forwarding a command, which increases the load of the platform of Internet of Things, increases the processing chain of the entire system, increases the delay of the system and reduces the system reliability.

### Summary of the Invention

The present invention provides a method and system for authorizing management of terminal of Internet of Things, under the conditions that the data security of terminal of Internet of Things is guaranteed, to reduce the load of the platform of Internet of Things for managing terminals of Internet of Things.

To achieve the aforementioned purposes of the present invention, the present invention provides the following technical scheme:
A method for authorizing the management of a terminal of Internet of Things comprises:
   a platform of Internet of Things authorizing an object to manage the terminal of Internet of Things, and the object that acquires authorization managing the terminal of Internet of Things.

Wherein, the step of the object that acquires authorization managing the terminal of Internet of Things comprises:
the object acquiring authorization information for managing the terminal of Internet of Things from the platform of Internet of Things, and the object using the authorization information for managing the terminal of Internet of Things to perform authentication and session key negotiation with the terminal of Internet of Things, and using a session key acquired through negotiation to manage the terminal of Internet of Things.

The method further comprises:
the object cancelling the management of the terminal of Internet of Things by deleting the authorization information for managing the terminal of Internet of Things.

The step of the platform of Internet of Things authorizing the object to manage the terminal of Internet of Things comprises:
the object sending identity information of the terminal of Internet of Things to the platform of Internet of Things;
the platform of Internet of Things negotiating the authorization information for managing the terminal of Internet of Things with a corresponding terminal of Internet of Things according to the identity information of the terminal of Internet of Things; and
the platform of Internet of Things sending the authorization information for managing the terminal of Internet of Things to the object.

The authorization information for managing the terminal of Internet of Things comprises at least one of authorization key, encryption method and authorization object.

The step of the object performing communication authentication with the terminal of Internet of Things comprises:
using the authorization key and the encryption method to encrypt an authentication request, and the authentication request comprising the authorization object;
transmitting the encrypted authentication request to the terminal of internet of Things; and
receiving a result of the terminal of Internet of Things authenticating the authorization object.

The step of the object performing the authentication with the terminal of Internet of Things further comprises: when an authentication result is Pass, the terminal of Internet of Things transmitting the session key to the object through the authentication result.

A system of Internet of things, comprising an object, a platform of Internet of Things, and a terminal of Internet of Things,
the platform of Internet of Things is configured to: authorize the object to manage the terminal of Internet of Things;
the object is configured to: after acquiring authorization, manage the terminal of Internet of Things.

Wherein, the object is configured to manage the terminal of Internet of Things in a following way:
obtaining authorization information for managing the terminal of Internet of Things from the platform of Internet of Things, using the authorization information for managing the terminal of Internet of Things to perform communication authentication and session key negotiation with the terminal of Internet of Things, and using a session key acquired through negotiation to manage the terminal of Internet of Things.

The platform of Internet of Things is configured to: notify the object to cancel the management of the terminal of Internet of Things;
the object is further configured to: after receiving information for canceling the management of the terminal of Internet of Things, cancel the management of the terminal of Internet of Things by deleting the authorization information for managing the terminal of Internet of Things.

The platform of Internet of Things comprises:
a first receiving module, which is configured to: receive identity information of the terminal of Internet of Things from said object;
a negotiation module, which is configured to: negotiate the authorization information for managing the terminal of Internet of Things with a corresponding terminal of Internet of Things according to the identity information of the terminal of Internet of Things; and
a first transmitting module, which is configured to: send the authorization information for managing the terminal of Internet of Things to the object.

The authorization information for managing the terminal of Internet of Things comprises at least one of authorization key, encryption method and authorization object.

The object comprises:
an encryption module, which is configured to: use the authorization key and the encryption method to encrypt an authentication request including the authorization object;
a second transmitting module, which is configured to: transmit the encrypted authentication request including the authorization object to the terminal of Internet of Things;
a second receiving module, which is configured to: receive a result of the terminal of Internet of Things authenticating the authorization object.

When an authentication result is Pass, the terminal of Internet of Things transmits the session key to the object through the authentication result.

The present invention provides a technical solution to authorize the object to manage the terminal of Internet of Things through the platform of Internet of Things. Under the conditions that the data security of the terminal of Internet of Things is guaranteed, the management load of the platform of Internet of Things is reduced, and meanwhile processing chains of Internet of Things are reduced, the delay of the system is shortened, and the system reliability is improved.

### Brief Description of Drawings

FIG. 1 is a structural schematic diagram of a system of Internet of Things provided in the present invention;
FIG. 2 is a sequence diagram of a method for the object managing the terminal of Internet of Things in the present invention;
FIG. 3 is a sequence diagram of a method for the terminal of Internet of Things performing the communication negotiation with the object in the present invention;
FIG. 4 is a structural schematic diagram of the platform of Internet of Things in the system of Internet of Things provided in the present invention;
FIG. 5 is a structural schematic diagram of the object in the system of Internet of Things provided in the present invention.

### Preferred Embodiments of the Present Invention

The technical scheme provided by the present invention will be described in detail in the following in combination with the accompanying figures. It should be noted that without any conflict, the embodiments in this application and the features in the embodiments could be combined with each other at random.

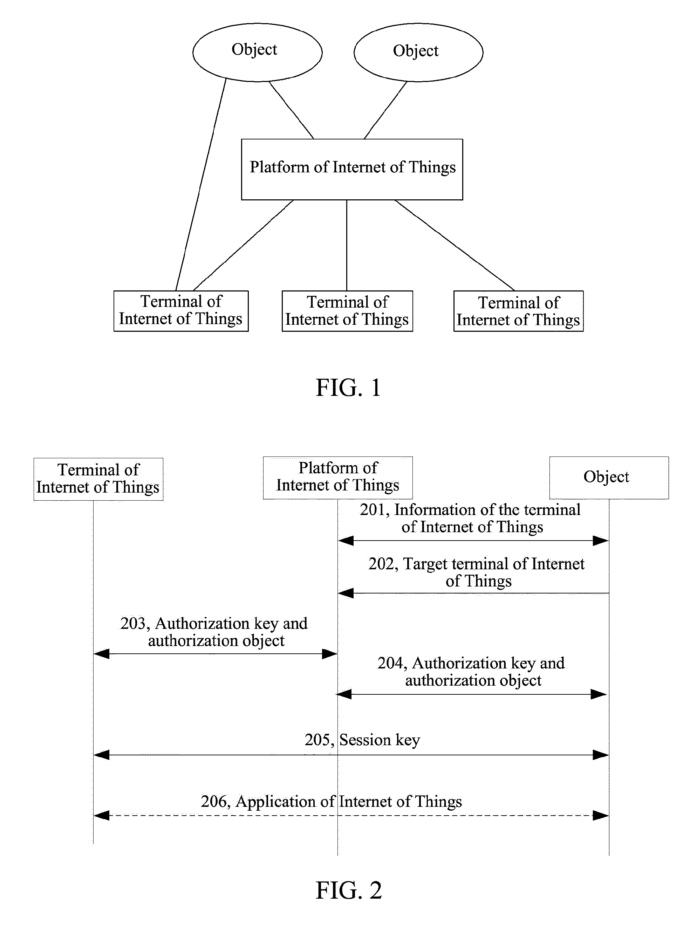

As shown in FIG. 1, the system of Internet of things provided in the present invention comprises an object, a platform of Internet of Things, and a terminal of Internet of Things,
the platform of Internet of Things is configured to: control and manage the terminal of Internet of Things, receive the data reported by the terminal of Internet of Things, process the data and provide the processed data to the object, and meanwhile, to have functions such as security, charging, network management and so on. In the present invention, the platform of Internet of Things authorizes the object to directly manage the terminal of Internet of Things;
the object is the specific application and service of the Internet of Things, and it manages the terminal of Internet of Things via the platform of Internet of Things. In the present invention, the object requests the authorization of the platform of Internet of Things to directly manage part of terminals of Internet of Things, and after the authorization is passed, the terminal of Internet of Things can be directly managed, and there is no need to forward the management command of the terminal of Internet of Things through the platform of Internet of Things;
the terminal of Internet of Things is configured to: collect and report data, and accept the management of the platform of Internet of Things, in the present invention, the terminal of Internet of Things also accepts the direct management of the object.

The method for the object of the Internet of Things directly managing the terminal of Internet of Things will be described in the following, as shown in FIG. 2:
In step 201, the platform of Internet of Things provides the information of the managed terminal of Internet of Things to the object;
the specific provision method can be that the platform of Internet of Things provides actively or the object actively requests the information of the terminal of Internet of Things.

In step 202, the object requests the authorization of the platform of Internet of Things to directly manage the target terminal of Internet of Things, comprising the identity information of the target terminal of Internet of Things.

In step 203, the platform of Internet of Things negotiates the authorization key, the authorization object and the encryption method with the corresponding terminal of Internet of Things according to the identity information of the target terminal of Internet of Things.

The authorization key is generated by the target terminal of Internet of Things and the platform of Internet of Things, and the methods for generating the authorization key in the related art are applicable to the present invention, which are not restricted herein;
the authorization object is the project information of the target terminal of Internet of Things which is directly managed by allowed user, and the project information can be all or part of the projects of the target terminal of Internet of Things, when it refers to part of the projects, it needs to list the projects that allow to be accessed;
the encryption method is the encryption information used by the object to communicate with the target terminal of Internet of Things.

In step 204, the platform of Internet of Things provides the authentication key, the encryption method, the authorization object as well as the address information of the authorization object to the object.

The address information of the authorization object is the information pre-stored in the platform of Internet of Things.

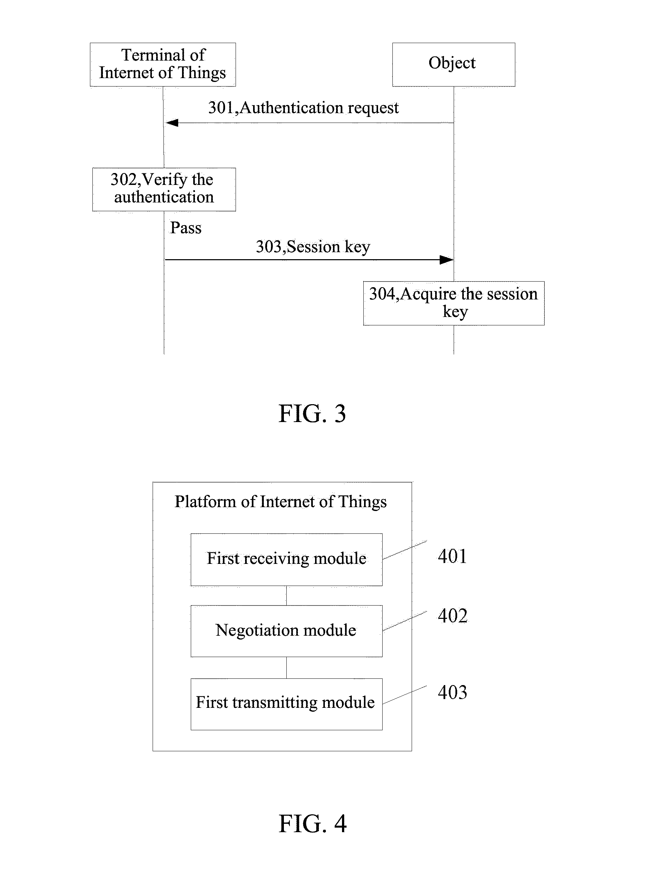

In step 205, the object performs the communication authentication through the authorization key and the authorization object to acquire the session key, and the specific process is shown in FIG. 3.

In step 206, the object and the target terminal of Internet of Things enable the session key to implement the secure communication.

In the following, the process of the object performing the authentication with the target terminal of Internet of Things will be described, as shown in FIG. 3:
In step 301, the object actively initiates an authentication request according to the address information of the authorization object, and the authentication request includes the identification of the authorization object, and the authentication request is encrypted by using the authorization key and the encryption method sent by the platform of Internet of Things.

In step 302, after the terminal of Internet of Things receives the request, it uses the corresponding decryption method and the authorization key to decrypt the request, obtaining the authorization object from the decrypted authentication request, authenticating the authorization object which is obtained, judging whether it is consistent with the authorization object after the negotiation with the platform of Internet of Things or not, if yes, the authentication is passed, a session key is generated and encrypted by using the authorization key and the encryption method, and then it proceeds to step 303; otherwise, the authentication is not passed and the process ends.

In step 303, the terminal of Internet of Things sends the authentication confirmation information, the authorization object and the encrypted session key to the object.

In step 304, after the object uses the authorization key and the corresponding decryption method to perform decryption, the authentication is determined to be passed, and the session key is acquired.

In this embodiment, the session key and the authentication are performed at the same time, or the session key is negotiated by two parties after the authentication is passed.

In the process of the object directly managing the terminal of Internet of Things, the platform of Internet of Things can cancel the authorization between the target terminal of Internet of Things and the object at any time, and the cancellation method is that the platform of Internet of Things sends authorization cancellation information to the terminal and the object, and after receiving the authorization cancellation message, the target terminal of Internet of Things deletes the authorization key, encryption method and authorization object of the object and rejects the management request sent by the object; after the object receives an authorization cancellation message, it deletes the authorization key, the encryption method, the authorization object, the address information of the authorization object and other relevant information.

In the method provided in the present invention, the platform of Internet of Things authorizes the object to manage the terminal of Internet of Things, under the condition that the data security of the terminal of Internet of Things is guaranteed, the management load of the platform of Internet of Things is reduced, which reduces the processing chain of the system of Internet of Things, shortens the processing delay of the system and improves the system reliability.

Correspondingly, the present invention also provides a system of Internet of Things using the aforementioned method, and the system comprises an object, a platform of Internet of Things, and a terminal of Internet of Things, and
the platform of Internet of Things is configured to: authorize the object to manage the terminal of Internet of Things;
the object is configured to: after acquiring the authorization, manage the terminal of Internet of Things.

The object is configured to manage the terminal of Internet of Things in a following way:
obtaining authorization information for managing the terminal of Internet of Things from the platform of Internet of Things, using the authorization information for managing the terminal of Internet of Things to perform communication authentication and session key negotiation with the terminal of Internet of Things, and using a session key acquired through negotiation to manage the terminal of Internet of Things.

When the object achieves the management of the terminal of Internet of Things, the platform of Internet of Things is also configured to: notify the object to cancel the management of the terminal of Internet of Things; the object is also configured to: after receiving information for canceling the management of the terminal of Internet of Things, cancel the management of the terminal of Internet of Things by deleting the authorization information for managing the terminal of Internet of Things.

As shown in FIG. 4, in the system, the platform of Internet of Things sends the authorization information for managing the terminal of Internet of Things to the object via the first receiving module 401, the negotiation module 402 and the first transmitting module 403, comprising:
the first receiving module 401 is configured to: receive the identity information of the terminal of Internet of Things from said object; the negotiation module 402 is configured to: negotiate the authorization information for managing the terminal of Internet of Things with the corresponding terminal of Internet of Things according to the identity information of the terminal of Internet of Things; and the first transmitting module 403 is configured to send the authorization information for managing the terminal of Internet of Things to the object after the negotiation is successful.

The authorization information for managing the terminal of Internet of Things comprises at least one of the authorization key, the encryption method and the authorization object.

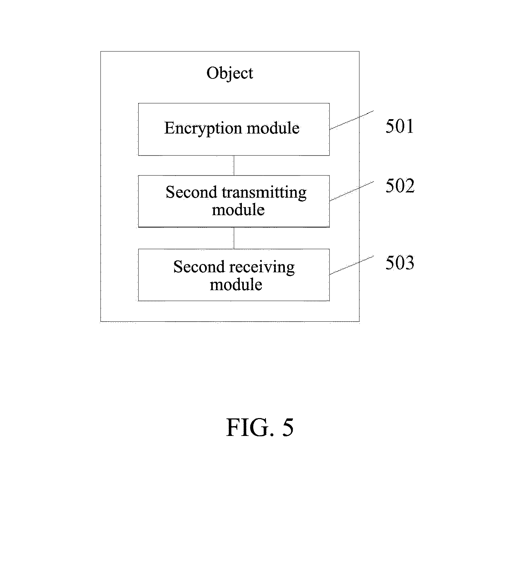

As shown in FIG. 5, in the system, the object achieves the authentication with the terminal of Internet of Things via the encryption module 501, the second transmitting module 502 and the second receiving module 503, comprising:
the encryption module 501 is configured to: use the authorization key and the encryption method to encrypt the authentication request including the authorization object; after the encryption is completed, the second transmitting module 502 is configured to: send the encrypted authentication request to the terminal of Internet of Things, wherein the authentication request includes the authorization object; after the terminal of Internet of Things completes the authentication, the second receiving module 503 is configured to: receive the result of the terminal of Internet of Things authenticating the authorization object.

Optionally, when the authentication result is Pass, the terminal of Internet of Things sends the session key to the object through the authentication result.

The system provided in the present invention authorizes the object to manage the terminal of Internet of Things through the platform of Internet of Things, under the condition that the data security of the terminal of Internet of Things is guaranteed, the management load of the platform of Internet of Things is reduced, which reduces the processing chain of the system of Internet of Things, shortens the processing delay of the system and improves the system reliability.

Those skilled in the field should understand that all or part of the steps in the aforementioned embodiments can be achieved by the program instructing the related hardware, and the program can be stored in a computer readable storage medium, when the program is executed, one or a combination of the steps of the method embodiment is included.

In addition, each function unit in each embodiment of the present invention can be implemented in the form of the hardware or software function module. If the integrated module is achieved in the form of software function modules and sold or used as an individual product, it might also be stored in a computer readable storage medium.

The aforementioned storage medium can be a read-only memory, magnetic disk or CD-ROM and so no.

The above description is only the specific embodiments of the present invention, but is not intended to limit the protection scope of the present invention, and for those skilled in the field, within the technical range disclosed in the present invention, any modification or replacement that can be easily thought should be included in the protection scope of the present invention. Therefore, the protection scope of the present invention should be based on the protection scope of the claims.

### Industrial Applicability

The present invention provides a technical solution to authorize the object to manage the terminal of Internet of Things through the platform of Internet of Things. Under the conditions that the data security of the terminal of Internet of Things is guaranteed, the management load of the platform of Internet of Things is reduced, which reduces the processing chain of the system of Internet of Things, shortens the processing delay of the system and improves the system reliability.

## Claims

1. A method for authorizing management of a terminal of Internet of Things, the method comprising:
a platform of Internet of Things authorizing an object to manage the terminal of Internet of Things, and the object that acquires authorization managing the terminal of Internet of Things.

2. The method of claim 1, wherein the step of the object that acquires the authorization managing the terminal of Internet of Things comprises:
the object acquiring authorization information for managing the terminal of Internet of Things from the platform of Internet of Things, and the object using the authorization information for managing the terminal of Internet of Things to perform authentication and session key negotiation with the terminal of Internet of Things, and using a session key acquired through negotiation to manage the terminal of Internet of Things.

3. The method of claim 2, wherein the method further comprises:
the object cancelling the management of the terminal of Internet of Things by deleting the authorization information for managing the terminal of Internet of Things.

4. The method of claim 2 or 3, wherein the step of the platform of Internet of Things authorizing the object to manage the terminal of Internet of Things comprises:
the object sending identity information of the terminal of Internet of Things to the platform of Internet of Things;
the platform of Internet of Things negotiating the authorization information for managing the terminal of Internet of Things with a corresponding terminal of Internet of Things according to the identity information of the terminal of Internet of Things; and
the platform of Internet of Things sending the authorization information for managing the terminal of Internet of Things to the object.

5. The method of claim 4, wherein the authorization information for managing the terminal of Internet of Things comprises at least one of authorization key, encryption method and authorization object.

6. The method of claim 5, wherein the step of the object performing communication authentication with the terminal of Internet of Things comprises:
using the authorization key and the encryption method to encrypt an authentication request, and the authentication request comprising the authorization object;
transmitting the encrypted authentication request to the terminal of internet of Things; and
receiving a result of the terminal of Internet of Things authenticating the authorization object.

7. The method of claim 6, wherein the step of the object performing the authentication with the terminal of Internet of Things further comprises: when an authentication result is Pass, the terminal of Internet of Things transmitting the session key to the object through the authentication result.

8. A system of Internet of things, comprising an object, a platform of Internet of Things, and a terminal of Internet of Things, wherein
the platform of Internet of Things is configured to: authorize the object to manage the terminal of Internet of Things;
the object is configured to: after acquiring authorization, manage the terminal of Internet of Things.

9. The system of claim 8, wherein the object is configured to manage the terminal of Internet of Things in a following way:
obtaining authorization information for managing the terminal of Internet of Things from the platform of Internet of Things, using the authorization information for managing the terminal of Internet of Things to perform communication authentication and session key negotiation with the terminal of Internet of Things, and using a session key acquired through negotiation to manage the terminal of Internet of Things.

10. The system of claim 8, wherein,
the platform of Internet of Things is further configured to: notify the object to cancel management of the terminal of Internet of Things;
the object is further configured to: after receiving information for canceling the management of the terminal of Internet of Things, cancel the management of the terminal of Internet of Things by deleting authorization information for managing the terminal of Internet of Things.

11. The system of claim 8 or 9, wherein the platform of Internet of Things comprises:
a first receiving module, which is configured to: receive identity information of the terminal of Internet of Things from said object;
a negotiation module, which is configured to: negotiate the authorization information for managing the terminal of Internet of Things with a corresponding terminal of Internet of Things according to the identity information of the terminal of Internet of Things; and
a first transmitting module, which is configured to: send the authorization information for managing the terminal of Internet of Things to the object.

12. The system of claim 11, wherein, the authorization information for managing the terminal of Internet of Things comprises at least one of authorization key, encryption method and authorization object.

13. The system of claim 12, wherein the object comprises:
an encryption module, which is configured to: use the authorization key and the encryption method to encrypt an authentication request including the authorization object;
a second transmitting module, which is configured to: transmit the encrypted authentication request including the authorization object to the terminal of Internet of Things;
a second receiving module, which is configured to: receive a result of the terminal of Internet of Things authenticating the authorization object.

14. The system of claim 13, wherein when an authentication result is Pass, the terminal of Internet of Things transmits the session key to the object through the authentication result.
